# EUROPEAN PATENT APPLICATION

(11) **EP 3 495 182 A1**
(43) Date of publication of application: **12.06.2019**
(21) Application number: 18211654.1
(22) Date of filing: 11.12.2018
(51) Int. Cl.: B60J 1/20, B60J 7/06, B60J 7/08, B60R 5/04, E06B 9/42, E06B 9/90

(54) **ROLLER BAR ASSEMBLY FOR A MECHANICAL SHEETING SYSTEM**

(30) Priority: 11.12.2017 GB 201720611
(71) Applicant: Eclats Holdings Limited, Michaels Close Aylesford Kent ME20 7XE (GB)
(72) Inventor: HINES, Steven, Aylesford, Kent, ME20 7XE (GB)
(74) Representative: Fry, David John

(57) **Abstract**

A spring-loaded roller bar assembly that has means to stop and lock the deployment of the tarpaulin at any chosen length to allow the operator to tie off the cover without needing to counter any retraction force. The assembly comprises a geared wheel located on at least one end of a roller bar, wherein the edge of the or each geared wheel has at least one set of asymmetrical teeth and at least one symmetrically shaped recess. The assembly includes a spring-loaded finger biased against the edge of the wheel and being pivotable thereby to alter the alignment of the finger against the wheel relative to the teeth.

## Description

### Field of invention

The present invention relates to a roller bar for a mechanical sheeting system providing a retractable cover for commercial vehicles. More especially, the invention relates to a roller bar assembly which is able to lock at various points during rotation to prevent further rotation at a desired time during extension or retraction of the sheeting.

### Background to the invention

Conventional sheeting/covering systems for commercial vehicles utilise spring loaded roller bars to allow the cover to be easily and efficiently pulled or retracted over a load area.

A common problem with systems using spring loaded roller bars is often the difficulty in tying off the tarpaulin when the cover is extended as the spring of the roller bar is biased towards the retracted position. As such the operator has to counter the fairly significant pulling force trying to retract the tarpaulin, at the same time as trying to tie the tarpaulin down over the area requiring cover.

The present invention seeks to provide a spring-loaded roller bar assembly that has means to stop and lock the deployment of the tarpaulin at any chosen length to allow the operator to tie off the cover without needing to counter any retraction force. The assembly also allows the operator easily and efficiently remove only part of the cover to allow access to the load area.

### Statement of invention

According to one aspect of the invention there is provided a spring-loaded roller bar assembly for a sheeting system, the assembly comprising a geared wheel located on at least one end of a roller bar, wherein the edge of the or each geared wheel has at least one set of asymmetrical teeth and at least one symmetrically shaped recess, and wherein the assembly includes a spring-loaded finger biased against the edge of the wheel and being pivotable thereby to alter the alignment of the finger against the wheel relative to the teeth.

By "asymmetrical teeth" it is meant that each tooth has an asymmetrical shape, one side of each tooth being sloped at a lesser angle than the other side, such that the teeth are orientated in an anti-clockwise (or clockwise) direction around the wheel.

The symmetrically shaped recess has a symmetrical shape, such as U-shaped, rectangular or square profile having radially extending walls, and not being orientated in a particular direction around the wheel.

### Brief description of the drawings

One embodiment of the invention will now be described by way of example only, with reference to the accompanying figures in which:
Figure 1 is roller bar assembly constructed in accordance with the invention;
Figure 2 is an exploded view of the roller bar assembly of figure 1;
Figure 3 illustrates a gear wheel used in the assembly;
Figures 4A-C show how the roller bar works as a sheet is extended;
Figure 5 shows the roller bar in a locked configuration;
Figure 6 shows how the roller bar works as the sheet is retracted.

### Detailed description of preferred embodiments

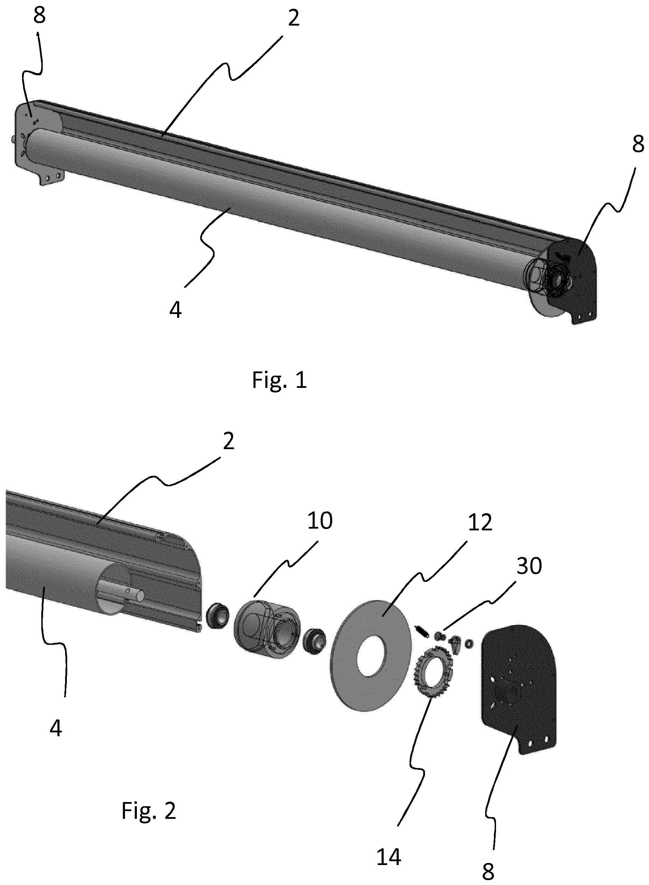

Figures 1 and 2 illustrate a roll bar assembly according to the invention. The roller bar is typically used as part of a sheet covering system on a commercial vehicle, such as a skip lorry.

The roller bar assembly comprises a housing 2 which holds the roller bar 4 which, in use, carries the cover, for example tarpaulin 6. The housing 2 comprises an elongate frame extending between two end plates 8.

The end of the roller bar 4 has a connector 10 which extends through a central aperture of an end disc 12 and through a central aperture of a geared wheel 14 to connection to the end plate 8.

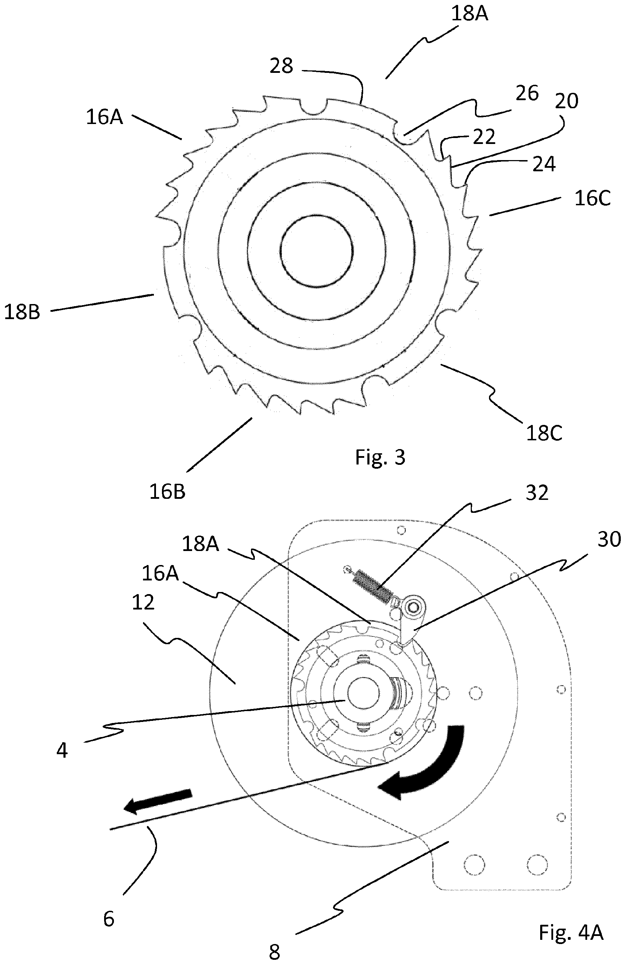

The shaped-profile of the geared wheel 14 can be best seen in figure 3. The maximum diameter of the geared wheel 14 is equal or slightly smaller than the diameter of the central aperture of the end disc 12.

The outer edge of the geared wheel 14 comprises three sets of outwardly extending asymmetrical teeth 16A, 16B, 16C separated by three "locking" sections 18A, 18B, 18C.

Each tooth has an asymmetric profile, meaning that one side wall 20 of the tooth is sloped at an angle that is less than the other side wall 22 of the tooth in such a way that the tip 24 of the tooth is offset and each teeth set 16 is generally orientated in the same, anti-clockwise (or clockwise) direction around the wheel edge. The side wall 22 of the teeth that is generally not sloped, extends generally radially from the edge of the wheel 14.

The locking sections 18 of the geared wheel 14 comprise two U-shaped recesses 26 separated by a raised section 28 that has a slight curvature to follow the circumference of the circular wheel 12.

The walls of the U-shaped recesses 26 extending generally radially from the edge of the wheel 14 and the recesses 26 are generally symmetrical such that the recesses 26 are not oriented in any direction around the wheel 14.

A spring-loaded finger 30 is attached to one surface of the end disc 10 above the geared wheel 14 and is biased downwardly such that the distal end of finger 30 engages with the edge of the wheel 14 at one of its sections. The end of the finger 30 is pivotable about the spring section 32.

During rotation of the geared wheel 14, to extend or retract the tarpaulin 6, the finger 30 engages with each section in turn.

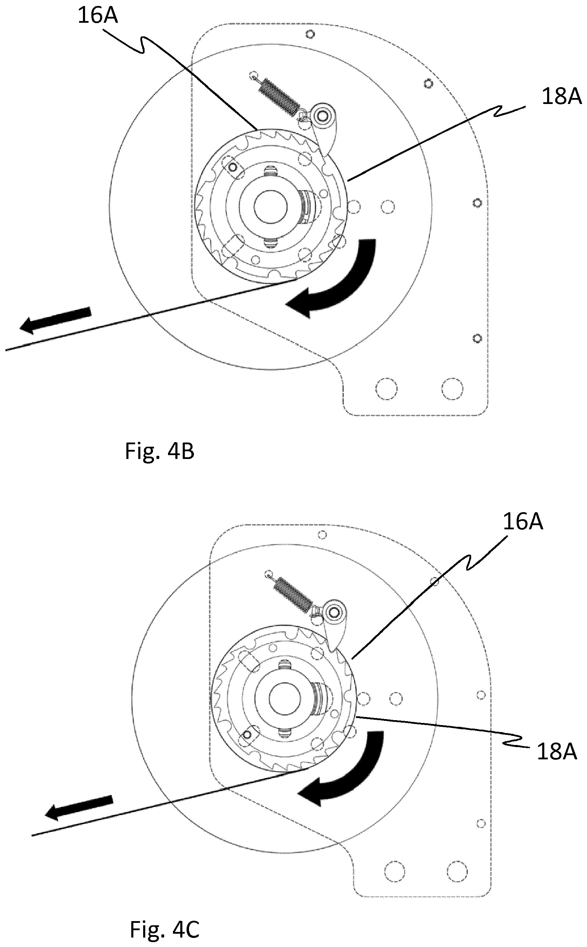

The working mechanism during rotation will now be described with reference figures 4 to 6.

Figures 4A to 4C showing the working mechanism during extension 6 of the tarpaulin across the load area requiring cover. During this time the geared wheel 14 rotates in a clockwise direction as indicated by the arrows.

Figure 4A shows an example starting point for the mechanism. In this position, the end of the finger 30 extends into the first U-shaped recess 26 of one locking section 18A. When the finger 30 is in this recess, the gear wheel 14 is locked in position and cannot rotate in either direction when no pulling force is applied to the end of the tarpaulin 6.

Both side walls of the recess 26 provide abutment services against and between which the finger 30 is located. The top part of the walls of the recess extend generally radially from the gear wheel 14 to the extent that the anti-clockwise sprung force of the roller bar 4 is not sufficiently strong enough to force the finger 30 up and out of the recess to allow anti-clockwise rotation to retract the tarpaulin 6.

When the tarpaulin 6 is pulled, clockwise movement of the gear wheel 14 causes the finger 30 to lift out of the recess 26 and continued pulling maintains clockwise rotation such that the locking section 18A passes under the finger 30 to, for example, a positon shown in figure 4B wherein the finger 30 now engages with the neighbouring section of teeth 16A.

As previously described, the teeth are oriented in an anti-clockwise direction which allows the teeth to pass under finger 30 when the gear wheel 14 is rotated clockwise whilst preventing anti-clockwise rotation.

Figure 4C shows the finger 30 biased downwardly within a tooth recess formed between the side walls 20, 22 in such a way that anti-clockwise rotation of the gear wheel is prevented due to the radial extension of the side wall 22 of the tooth but where clockwise rotation is possible when the tarpaulin 6 is pulled due to the sloped angle of the opposing wall 20.

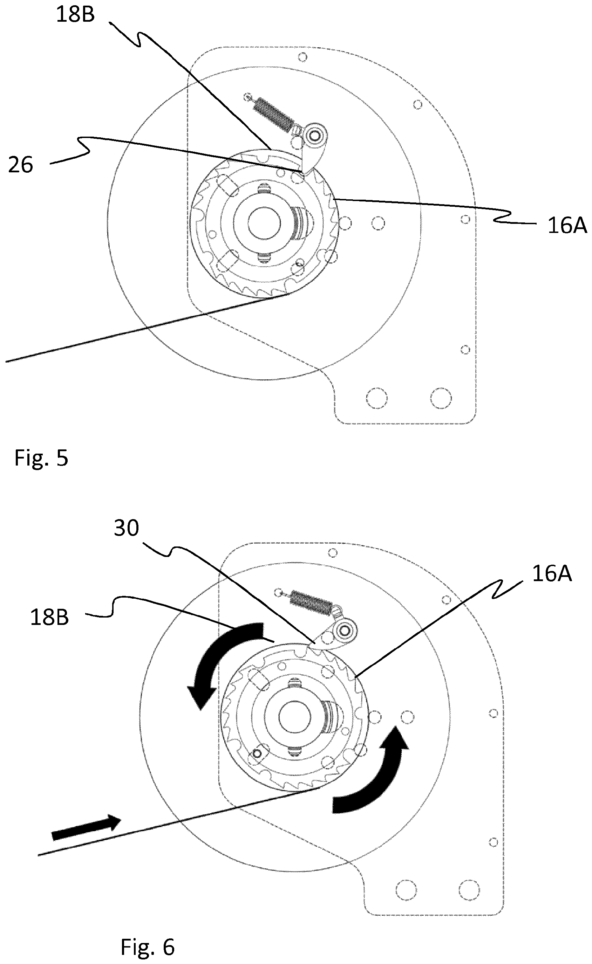

Continued pulling of the tarpaulin 6 maintains clockwise rotation of the gear wheel 14 to a point, for example, where the finger 30 is downwardly biased into the first recess 26 of the next locking section 16B, as shown in figure 5. In this position, like with that shown in figure 3A, the rotation of the gear wheel 14 either way is prevented. The wheel 14 is therefore locked in this position allowing the tarpaulin 6 to be tied off without needing to counter any retraction force.

Figure 6 shows the mechanism during retraction of the tarpaulin 6 when required. Under these circumstances, the gear wheel 14 rotates anti-clockwise to retract the tarpaulin 6 (as shown by the arrows).

Anti-clockwise rotation of the gear wheel 14 causes the end of the finger 30 to pivot about the spring section 32 such that the end of the finger 30 is orientated in an anti-clockwise direction such that such that the teeth are able to move under it without the finger 30 locating within the toothed recesses, which would otherwise prevent further anti-clockwise movement.

Combining asymmetric teeth 16 and symmetric recesses 26 on the edge of the gear wheel 14 provides a plurality of opportunities to lock the gear wheel 14 to prevent a rotational force being encountered either way whilst the tarpaulin 6 is tied or untied. Furthermore, it is possible for the operator to lock the gear wheel 14 to allow the cover to allow only partial extension of removal of the cover over a load.

It will be appreciated that the foregoing is merely an example of an embodiment and just some examples of its use. The skilled reader will readily understand that modifications can be made thereto without departing from the true scope of the invention.

## Claims

1. A spring-loaded roller bar assembly for a sheeting system, the assembly comprising a geared wheel located on at least one end of a roller bar, wherein the edge of the or each geared wheel has at least one set of asymmetrical teeth and at least one symmetrically shaped recess, and wherein the assembly includes a spring-loaded finger biased against the edge of the wheel and being pivotable thereby to alter the alignment of the finger against the wheel relative to the teeth.

2. A roller bar assembly according to claim 1, wherein each tooth has an asymmetrical shape.

3. A roller bar assembly according to claim 2, wherein one side of each tooth is sloped at a lesser angle than the other side of the tooth such that the teeth are orientated in an anti-clockwise direction around the wheel.

4. A roller bar assembly according to claim 3, wherein the recess is U-shaped.

5. A roller bar assembly according to claim 4, wherein the recess has a square profile with radially extending parallel side walls.
